# DEMANDE DE BREVET EUROPEEN

(11) **EP 2 381 683 A1**
(43) Date de publication de la demande: **26.10.2011**
(21) Numéro de dépôt: 11162790.7
(22) Date de dépôt: 18.04.2011
(51) Int. Cl.: H04N 7/173, H04L 29/06

(54) **Procédé et système de gestion d'une session de diffusion en continu d'un flux vidéo affiché en direct**

(30) Priorité: 23.04.2010 FR 1053148
(71) Demandeur: Orange Vallee, 92320 Chatillon (FR)
(72) Inventeur: Marignan, Willy, 75019 Paris (FR); Odriosolo, Guillaume, 75015 Paris (FR); Claudot, Paul-Anatole, 57890 Porcelette (FR); Ganneau, Vincent, 72100 Le Mans (FR); Cabot, Antoine, 94800 Villejuif (FR)
(74) Mandataire: Le Tourneau, Augustin

(57) **Abrégé**

L'invention concerne un procédé et un système associé de gestion d'une session de *live streaming* affichée en direct sur des terminaux (10) connectés à un réseau de communication (20).

Le procédé comprend des étapes consistant à:
- envoyer (E314, E316) des invitations à la session, à plusieurs terminaux invités (10ᵢ) sélectionnés par un terminal émetteur (10ₑ);
- mettre (E310) les terminaux émetteur et invités dans des états d'attente synchronisés en fonction d'une durée prédéterminée de synchronisation (SYNCH), états pendant lesquels le terminal émetteur ne transmet pas, dans ladite session, de flux vidéo à destination d'un serveur de multidiffusion (60);
- lorsque le terminal émetteur quitte son état d'attente pour transmettre un flux vidéo en direct au serveur de diffusion, permettre (E338), aux terminaux invités ayant répondu positivement à l'invention, d'accéder (E340) au serveur de diffusion pour recevoir le flux vidéo diffusé en continu.

## Description

La présente invention concerne le domaine des communications, et plus particulièrement un procédé et un système associé de gestion d'une session de diffusion en continu d'un flux vidéo en direct entre terminaux mobiles d'un réseau de téléphonie mobile.

Dans le domaine des communications, il est un souhait grandissant des utilisateurs actuels de terminaux électroniques de partager leurs expériences en direct avec d'autres utilisateurs. C'est dans ce contexte que des réseaux sociaux ont pu se développer, notamment Twitter (nom commercial) permettant de restituer des impressions écrites à des amis par l'utilisation de billets.

Le partage d'expériences par diffusion continue de séquences vidéo en direct (ou *live streaming)* est plus complexe et commence à émerger.

La réalisation d'une telle diffusion, généralement de durée relativement brève, constitue une session de diffusion.

On connaît notamment des services tels que Qik et Ustream (noms commerciaux) qui permettent de diffuser une vidéo en direct depuis un téléphone mobile vers l'Internet.

Toutefois, pour accentuer la possibilité de nomadisme associée à ce type de partage d'expériences, des services tel que Knocking (nom commercial) ont été mis en place et permettent désormais de diffuser en direct une vidéo capturée par son propre terminal mobile vers un autre terminal mobile (par exemple un téléphone mobile, un téléphone intelligent ou un assistant personnel vers un équipement similaire).

Une session de *live streaming* est alors établie dès que le terminal invité accepte l'invitation émise par le terminal émetteur. La publication WO 2009/080345 décrit par exemple une telle session lorsque les deux terminaux utilisent des protocoles de communication différents. Dans ce cas, une passerelle sert d'intermédiaire.

La session est en revanche terminée dès que l'un des terminaux y met fin.

Cette solution présente toutefois l'inconvénient de ne pas permettre d'établir une session de diffusion en continu d'un flux vidéo en direct d'un terminal émetteur à destination de plusieurs terminaux récepteurs, alors que, comme montré par les réseaux sociaux tels Twitter, le partage d'expériences est généralement destiné à plusieurs utilisateurs.

Toutefois, la mise en place de solutions répondant à cette problématique n'est pas sans difficulté de gestion du fait d'une nécessité, dans un tel contexte d'utilisation, de devoir prendre en compte une pluralité de terminaux destinataires invités.

L'invention propose ainsi d'anticiper ces difficultés à l'aide d'un procédé de gestion d'une session de diffusion en continu d'un flux vidéo affiché en direct sur une pluralité de terminaux connectés à un réseau de communication, comprenant des étapes consistant à :
- mettre le terminal émetteur dans un état d'attente qui est fonction d'une durée prédéterminée de synchronisation, état pendant lequel le terminal émetteur ne transmet pas, dans ladite session de diffusion créée, de flux vidéo en direct à destination d'un serveur de diffusion apte à recevoir et à multidiffuser en continu un flux vidéo;
- mettre les terminaux invités ayant répondu positivement à l'invitation dans un état d'attente qui est synchronisé avec celui du terminal émetteur;
- lorsque le terminal émetteur quitte son état d'attente pour transmettre un flux vidéo en direct au serveur de diffusion, permettre, aux terminaux invités ayant répondu positivement à l'invention, d'accéder au serveur de diffusion pour recevoir le flux vidéo diffusé en continu.

La notion de "en direct" (ou *live)* est prise dans son sens classique pour le domaine des communications, à savoir que le flux vidéo est transmis ou diffusé en même temps qu'il est capturé ou créé au niveau d'un terminal émetteur, pour un visualisation sur une pluralité de terminaux récepteurs, avec au maximum un très léger différé engendré par les délais de traitement ou de transmission. Cette notion de "en direct" s'oppose donc à des flux vidéo préalablement enregistrés et stockés.

Les terminaux mobiles actuels étant équipés d'accès Internet, le serveur de diffusion peut notamment consister en un serveur web permettant la multidiffusion à un ensemble de terminaux s'y connectant. Par ailleurs, ces mêmes terminaux sont généralement équipés de moyens de capture photo et/ou vidéo de telle sorte qu'ils peuvent générer aisément un flux vidéo en direct.

L'invention offre ainsi une temporisation avant la diffusion en continu d'une session live (vidéo notamment), laquelle temporisation permet aux utilisateurs invités de partager la même expérience malgré le retard de certains. Elle permet en outre à l'utilisateur émetteur d'éventuellement finaliser la préparation de son intervention avant que ne débute la diffusion.

Cette temporisation est obtenue, selon l'invention, par la mise dans des états d'attente synchronisées, par exemple au travers d'une interface d'attente, des différents protagonistes de la diffusion en direct, qu'ils soient acteurs ou spectateurs, jusqu'au déclenchement de ladite diffusion en direct.

A noter que la sélection des terminaux invités peut être menée au travers d'un carnet d'adresses de l'utilisateur émetteur. Un tel carnet d'adresses est classiquement mémorisé sur un terminal mobile.

En particulier, la durée prédéterminée de l'état d'attente est définie à compter de l'envoi desdites invitations. Ainsi, la mise en attente est fonction de cette durée. Celle-ci est de préférence appliquée de façon similaire à l'utilisateur émetteur et aux utilisateurs invités pour leur permettre *in fine* de partager la même expérience. Elle peut être de l'ordre de quelques secondes à quelques minutes, par exemple une minute.

En rendant l'attente fonction d'une durée prédéterminée, l'invention permet par exemple de limiter, dans le temps, l'attente de chaque utilisateur, ce qui leur permet de s'organiser plus efficacement.

Selon une caractéristique particulière, le procédé comprend une étape d'affichage, sur un terminal invité ou émetteur, d'un compte à rebours de ladite durée prédéterminée. Cet affichage peut être réalisé au travers d'un écran d'attente sur les terminaux concernés (émetteur et invités ayant répondu positivement). Connaissant ainsi précisément le temps maximal avant le début de la diffusion, l'utilisateur concerné peut s'organiser d'autant mieux: par exemple, pour l'utilisateur émetteur en préparant son intervention.

En particulier, le procédé peut comprendre, pendant l'état d'attente, l'affichage sur le terminal émetteur d'un statut des réponses des terminaux invités à ladite invitation. Cela permet à l'utilisateur émetteur d'adapter son comportement à l'évolution des réponses, par exemple en mettant fin de façon anticipée à la durée prédéterminée d'attente, et ainsi diffuser le flux vidéo au plus tôt.

Par ailleurs, l'invention peut prévoir que la transmission en direct du flux vidéo depuis le terminal émetteur vers le serveur de diffusion et que la rediffusion continue dudit flux vidéo depuis le serveur de diffusion vers lesdits terminaux invités sont automatiquement déclenchées à l'expiration de la durée prédéterminée. Ce déclenchement automatique peut notamment être réalisé si au moins un terminal invité a répondu favorablement à ladite invitation. Cette disposition correspond à une programmation de la diffusion, permettant par exemple à l'utilisateur émetteur de se mettre en situation s'il souhaite se filmer. Pour les utilisateurs invités, ce déclenchement automatique leur permet de connaître à l'avance (grâce notamment au compte à rebours mentionné précédemment) l'instant de démarrage de la diffusion, et ainsi de se concentrer sur cette diffusion sans perte de temps au moment précis de ladite expiration.

Selon une caractéristique particulière, en réponse à une action manuelle sur ledit terminal émetteur prévue pour déclencher ladite transmission en direct du flux vidéo, le terminal émetteur quitte l'état d'attente avant l'expiration de ladite durée prédéterminée. Dans le cas d'un tel déclenchement manuel par l'utilisateur émetteur, on peut prévoir, bien entendu, que la rediffusion continue par le serveur de diffusion est déclenchée automatiquement vers les terminaux invités ayant répondus positivement aux invitations.

Cette action manuelle peut être opérée sur un écran d'attente affiché sur le terminal émetteur. Ce déclenchement manuel permet notamment de réduire le temps d'attente des utilisateurs si par exemple tous les utilisateurs invités ont répondu aux invitations.

Selon une autre caractéristique particulière, le procédé comprend une étape de transmission à ladite pluralité de terminaux invités d'un signal de synchronisation définissant la durée prédéterminée. Cette transmission peut notamment être effectuée lors de l'envoi des invitations. Par ailleurs, le signal de synchronisation peut être généré par le terminal émetteur ou, en variante, par un serveur central de gestion à partir duquel sont gérées les invitations et la session de diffusion.

Cette disposition permet d'assurer la présence simultanée des utilisateurs invités avec l'utilisateur émetteur pour le partage de la vidéo en direct, sans décalage susceptible d'empêcher certains invités d'assister à l'ensemble du direct.

Cette synchronisation est d'autant plus importante que l'invention peut s'intégrer dans un service de réseau social par billets vidéo où il serait de pratique courante de poster des billets de courte durée, à l'instar de la brièveté des billets Twitter.

Dans un mode de réalisation de l'invention, l'étape consistant à permettre aux terminaux invités l'accès au serveur de diffusion comprend, suite au commencement de la diffusion du flux vidéo en direct par le terminal émetteur, la transmission d'une adresse du serveur de diffusion sur laquelle ledit flux vidéo est rediffusé en continu par le serveur de diffusion.

De même, il peut être prévu que les terminaux invités ayant répondu positivement à ladite invitation consultent périodiquement une information de statut de ladite session de diffusion, cette information étant maintenue à jour par un serveur de gestion, et que le procédé comprend, en réponse à une dite consultation d'un terminal invité après un déclenchement de ladite transmission en direct du flux vidéo depuis le terminal émetteur vers le serveur de diffusion, une étape de transmission, audit terminal invité, d'une adresse d'accès au serveur de diffusion de sorte, pour ledit terminal invité, à accéder au flux vidéo diffusé en continu.

Le statut est notamment une information indiquant l'état (par exemple "non commencée", "en cours" ou "terminée") dans lequel est la session de diffusion. De la sorte, l'invention communique le plus tard possible l'adresse à laquelle le flux vidéo diffusé en direct est accessible. Cette disposition permet donc de garantir la confidentialité de la session de diffusion entre les seuls terminaux émetteur et invités ayant répondu positivement à l'invitation, puisque notamment l'adresse communiquée ne peut alors être diffusée à des tiers pendant la période d'attente.

Dans un autre mode de réalisation, le procédé comprend des étapes consistant à :
- enregistrer le flux vidéo diffusé en continu à un emplacement de stockage accessible par l'Internet, et
- lorsqu'un terminal invité répond positivement à ladite invitation et postérieurement à la fin de la session de diffusion, rediriger ledit terminal invité vers l'emplacement de stockage dudit flux vidéo enregistré.

La fin de la session correspond notamment à la fin, pour le terminal émetteur, de la transmission du flux vidéo au serveur de diffusion.

Cette redirection peut être faite en communiquant tout simplement l'adresse Internet à laquelle se situe la vidéo enregistrée. Elle est susceptible d'être mise en oeuvre d'autant plus souvent que les sessions de diffusion sont courtes.

Cette disposition s'intègre particulièrement bien dans un contexte de réseau social, en ce que l'enregistrement réalisé peut constituer un billet vidéo posté sur le compte de l'utilisateur émetteur. Dans ce cas, la redirection peut rediriger l'utilisateur invité retardataire vers la page de ce réseau social associée à l'utilisateur émetteur, pour visualiser en différer la vidéo à laquelle il était invité.

Les terminaux mobiles actuels qui intègrent un accès à l'Internet permettent, sans difficulté, cet accès à l'emplacement de stockage.

Par ailleurs, il peut être prévu que la mise en attente de la transmission en direct du flux vidéo depuis le terminal émetteur vers le serveur de diffusion comprend l'affichage, sur ce terminal émetteur, d'un statut de réponse desdits terminaux invités aux invitations envoyées. Ce statut de réponse peut par exemple consister à indiquer si les invités ont accepté, refusé ou pas encore répondu aux invitations, au travers d'un moyen quelconque d'indication: feux de couleurs, mentions 'OK' ou 'KO', etc.

Corrélativement, l'invention concerne un système de gestion d'une session de diffusion en continu d'un flux vidéo affiché en direct sur une pluralité de terminaux connectés à un réseau de communication, comprenant :
- un module de notification apte à envoyer des invitations à participer à la session de diffusion, à destination d'une pluralité de terminaux invités et sélectionnés à partir d'un terminal émetteur;
- un premier moyen de mise en attente configuré pour mettre le terminal émetteur dans un état d'attente qui est fonction d'une durée prédéterminée de synchronisation, état pendant lequel le terminal émetteur ne transmet pas, dans ladite session de diffusion créée, de flux vidéo en direct à destination d'un serveur de diffusion apte à recevoir et à multidiffuser en continu un flux vidéo;
- un second moyen de mise en attente configuré pour mettre les terminaux invités ayant répondu positivement à l'invitation dans un état d'attente qui est synchronisé avec celui du terminal émetteur;
- un moyen permettant, lorsque le terminal émetteur quitte son état d'attente pour transmettre un flux vidéo en direct au serveur de diffusion, l'accès, par les terminaux invités ayant répondu positivement à ladite invitation, au serveur de diffusion pour recevoir le flux vidéo diffusé en continu.

Le système présente des avantages similaires à ceux du procédé exposé ci-dessus. Notamment, le moyen permettant l'accès peut être un moyen d'un serveur de gestion communiquant, à un terminal invité, l'adresse à laquelle le flux vidéo peut être obtenu auprès du serveur de diffusion.

De façon optionnelle, le système peut comprendre des moyens se rapportant aux caractéristiques du procédé exposé précédemment.

L'invention concerne également un programme d'ordinateur lisible par un microprocesseur, comprenant des portions de code logiciel adaptées à mettre en oeuvre un procédé conforme à l'invention, lorsqu'il est chargé et exécuté par le microprocesseur.

Le programme d'ordinateur présente des caractéristiques et avantages analogues au procédé qu'il met en oeuvre.

D'autres particularités et avantages de l'invention apparaîtront encore dans la description ci-après, illustrée par les dessins ci-joints, dans lesquels :
- la **figure 1** représente un exemple de système pour la mise en oeuvre de l'invention;
- la **figure 2** illustre divers écrans affichés sur un terminal émetteur lors de la mise en oeuvre de l'invention;
- la **figure 3** représente schématiquement des échanges entre différentes entités du système de la **figure 1** lors de la mise en oeuvre de l'invention; et
- la **figure 4** illustre divers écrans affichés sur un terminal invité lors de la mise en oeuvre de l'invention.

La présente invention concerne un procédé de gestion d'une session de diffusion en continu d'un flux vidéo transmis par un terminal mobile émetteur et affiché en direct par des terminaux mobiles invités, tous connectés à un réseau de téléphonie mobile. Une telle diffusion en direct et en continu d'un flux vidéo est également connue sous la terminologie *"live streaming".*

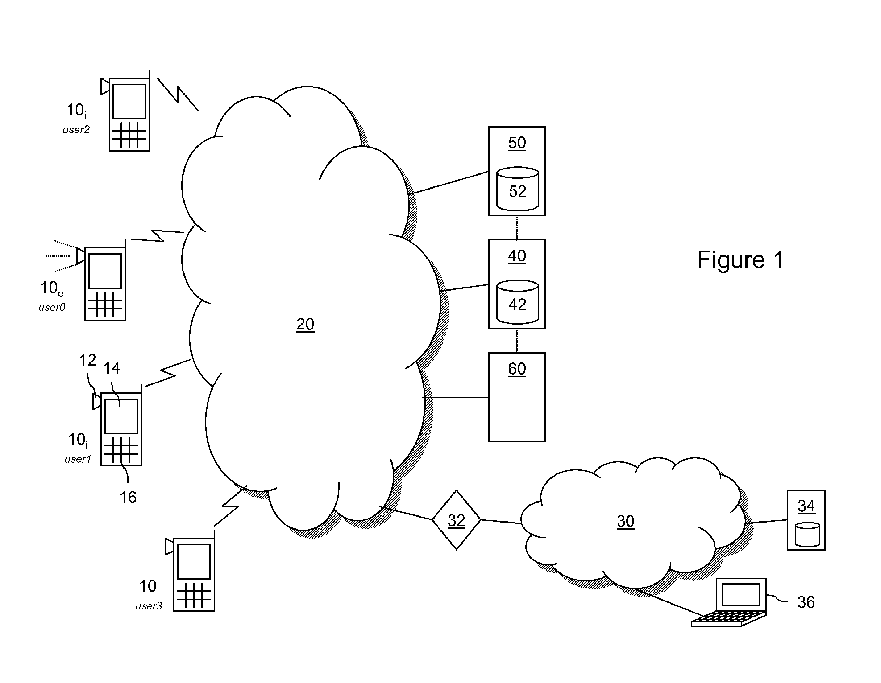

En référence à la **figure 1**, un exemple de système 1 pour la mise en oeuvre de l'invention comprend une pluralité de terminaux mobiles 10 reliés à un réseau de téléphonie mobile 20 supportant la transmission de données par paquets, par exemple un réseau UMTS ("*Universal Mobile Telecommunications System*") ou réseau 3G.

Les terminaux mobiles 10 sont de type classique tels que des téléphones mobiles, des téléphones intelligents ou des assistants personnels, disposant de moyens de communication selon un protocole de transfert de données, par exemple permettant d'accéder au réseau Internet 30 (le bloc 32 représentant schématiquement les différents équipements interconnectant le réseau Internet 30 et le réseau de téléphonie mobile 20).

Pour la mise en oeuvre de l'invention, chaque terminal mobile 10 peut jouer le rôle de terminal émetteur d'un flux vidéo *live* diffusé en continu ou le rôle de terminal invité à visionner/afficher ce flux vidéo diffusé par un autre terminal. Pour ce faire, ces terminaux sont équipés d'un dispositif de capture d'images 12 (par exemple un appareil photos ou une caméra), d'un écran d'affichage 14 et de moyen de saisie/sélection 16 permettant d'interagir avec les fonctionnalités et menus du terminal 10.

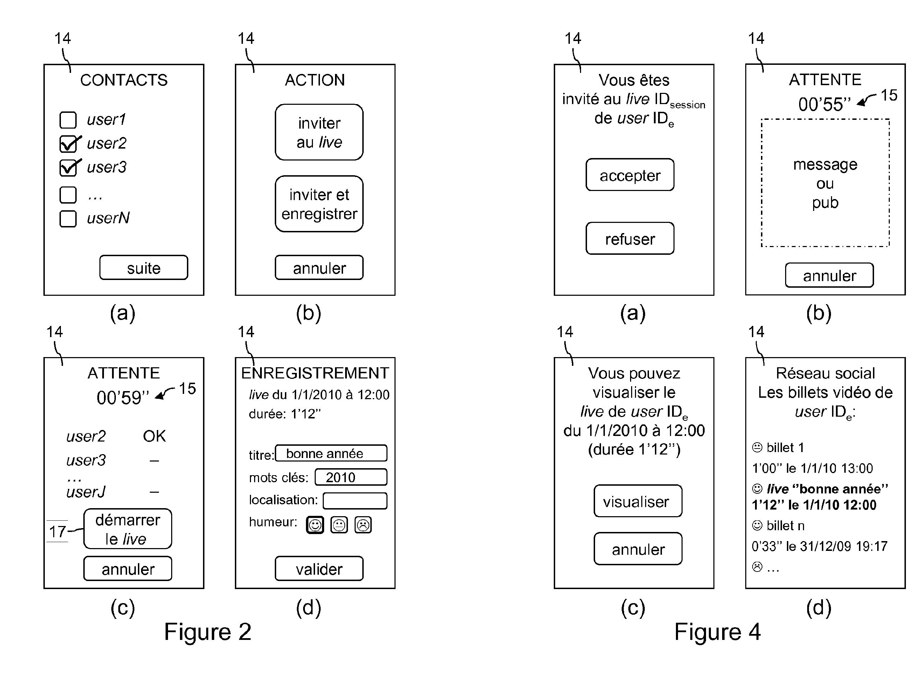

Ils comprennent en outre chacun une application APP pour la mise en oeuvre de l'invention. Cette application, lorsqu'elle est exécutée, assure par exemple le codage ou le décodage du flux vidéo, ou encore les communications avec un serveur de gestion 40 ou l'affichage des écrans des **figures 2** et **4** comme décrit pas la suite.

Dans la suite, on notera 10ₑ le terminal émetteur et 10ᵢ les terminaux invités.

Le système 1 comprend également, reliés au réseau de téléphonie mobile 20, un serveur de gestion des sessions de diffusion 40, un serveur de notification 50 et un serveur de diffusion 60. Ces différents serveurs disposent de moyens de communication selon le protocole de transfert de données supporté par le réseau 20. Ainsi, les terminaux 10 et ces serveurs peuvent communiqués entre eux.

Les communications entre ces serveurs peuvent transiter par le réseau 20 ou emprunter des liaisons spéciales (en pointillés sur la figure) prévues entre chacun de ces serveurs.

Comme on le verra pas la suite, le serveur de gestion des sessions de diffusion 40 a pour fonction la création d'une session de diffusion à la requête d'un terminal émetteur 10ₑ et le suivi de l'état de cette session au cours de sa vie: session non commencée, en cours de diffusion ou terminée.

Ce serveur de gestion 40 comprend ainsi une base de données 42 stockant les informations relatives aux différentes sessions de *streaming live,* et notamment :
- un identifiant de session,
- un identifiant du terminal émetteur,
- un identifiant de chaque terminal invité ainsi que le statut de la réponse apportée à l'invitation correspondante,
- des informations de date et d'heure de la session,
- un statut de la session: non commencée, en cours, terminée, enregistrée, annulée,
- une adresse URL ("*Uniform Resource Locator*" ou "localisateur uniforme de ressource") de téléchargement pour le terminal émetteur,
- une ou plusieurs adresses URL de lecture pour les terminaux invités,
- un drapeau binaire indiquant si un enregistrement de la session doit être opéré, et dans ce cas des informations complémentaires décrivant cet enregistrement.

Le serveur de notification 50 a pour fonction l'émission de notifications à différents terminaux invités en fonction d'instruction reçues depuis le serveur de gestion 40. Ces notifications, notamment des invitations à participer à une session de diffusion prévue selon l'invention, peuvent revêtir plusieurs formes selon les terminaux considérés. Par exemple, la technologie *Apple Push Notification* mise en oeuvre dans les téléphones intelligents Iphone (nom commercial) permet d'émettre des notifications poussées qui peuvent réveiller à distance l'application APP du téléphone. En variante, pour la technologie Android (nom commercial), des notifications de type SMS peuvent être utilisées. Enfin, encore en variante, des notifications par email sont également envisageables.

Le serveur de notification 50 dispose d'une base de données 52 répertoriant l'ensemble des identifiants de terminaux nécessaires à la notification de ceux-ci et éventuellement le type de terminal. C'est par exemple le cas des numéros d'identification des téléphones Iphone qui sont nécessaires pour la mise en oeuvre du service *Apple Push Notification.* Ainsi, à partir du numéro d'appel d'un utilisateur, le numéro d'identification de son terminal enregistré auprès de ce serveur est récupéré ce qui permet de former une notification le cas échéant.

Le serveur de diffusion 60 est un serveur de diffusion, type serveur Yacast (nom commercial), équipé d'un module de multidiffusion type Wowza (non commercial). Il est ainsi apte à recevoir un flux vidéo transmis en direct par un terminal émetteur et à multidiffuser en continu et sans délai (donc en conservant le direct) ce flux reçu vers plusieurs terminaux destinataires en dispatchant le flux vidéo reçu sur plusieurs adresses URL de retransmission.

Les fonctionnalités de ces différents serveurs peuvent toutefois être mises en oeuvre au sein d'un même équipement ou réparties sur un nombre quelconque d'équipements. Pour des raisons de clarté d'explication, on conservera pour la suite trois serveurs distincts.

Par ailleurs, bien que dans cet exemple ces serveurs soient prévus reliés au réseau de téléphone mobile 20, tout ou partie de ceux-ci peut être reliée au réseau Internet 30. Les terminaux 10 étant pourvus de moyens d'accès au réseau Internet, les communications décrites ci-après avec les serveurs 40, 50 et 60 peuvent également être mises en oeuvre pour des serveurs reliés au réseau Internet.

En référence maintenant aux **figures 2****,** **3** et **4**, le gestion d'une session de diffusion en direct entre les terminaux est effectuée comme suit.

Un utilisateur désirant émettre un flux vidéo live en continu lance son application APP dédiée sur son terminal 10ₑ. Cette application peut être un service auquel il a souscrit et auquel il accède désormais par saisie d'un identifiant personnel et d'un mot de passe.

La **figure 2a** montre un écran de l'application obtenu lorsque l'utilisateur 10ₑ sélectionne une fonction de diffusion live dans l'application. Cet écran affiche notamment l'ensemble des contacts de son carnet de contacts ou de son compte dans le service auquel il a souscrit, par exemple par nom. Si besoin, seuls les contacts ayant également, sur leurs terminaux, l'application APP permettant la mise en oeuvre de l'invention sont affichés par filtrage (cette information pouvant être récupérée par requêtage du serveur de gestion 40 listant tous les terminaux inscrits au service).

Au travers de cet écran, l'utilisateur sélectionne les contacts qu'il souhaite inviter à son *live,* ici les utilisateurs *user2* et *user3.* Le nombre de contacts pouvant être invité peut être limité, par exemple à 10, notamment en fonction de considérations techniques au niveau du serveur de diffusion 60.

Suite à cette sélection, l'utilisateur précise s'il souhaite uniquement procéder à la session live ou souhaite également que la session *live* soit enregistrée et mise à disposition ultérieurement (**figure 2b**).

Cet enregistrement peut notamment s'intégrer dans un service de réseau social hébergé par un serveur web 34.

A titre d'exemple, ce service de réseau social comprend un ensemble d'utilisateurs abonnés ayant chacun une page personnelle sur laquelle chaque abonné vient poster des billets vidéo, à l'instar des billets écrits dans le réseau Twitter (nom commercial). Ainsi, un utilisateur 36 du réseau Internet 30 peut accéder à ces billets vidéo.

Ces billets vidéo peuvent notamment consister en une courte séquence vidéo à laquelle sont associés un titre, des données d'horodatage ainsi qu'une humeur (par exemple un icône), et optionnellement d'autres informations (mots clés, information de localisation, etc.).

Comme il sera décrit par la suite, l'enregistrement du *live* réalisé par l'utilisateur émetteur 10ₑ est mémorisé au niveau de sa page dans ce service de réseau social, sur le serveur 34. Le serveur 34 peut notamment faire partie du serveur 40 lorsque ce dernier est intégré au réseau Internet.

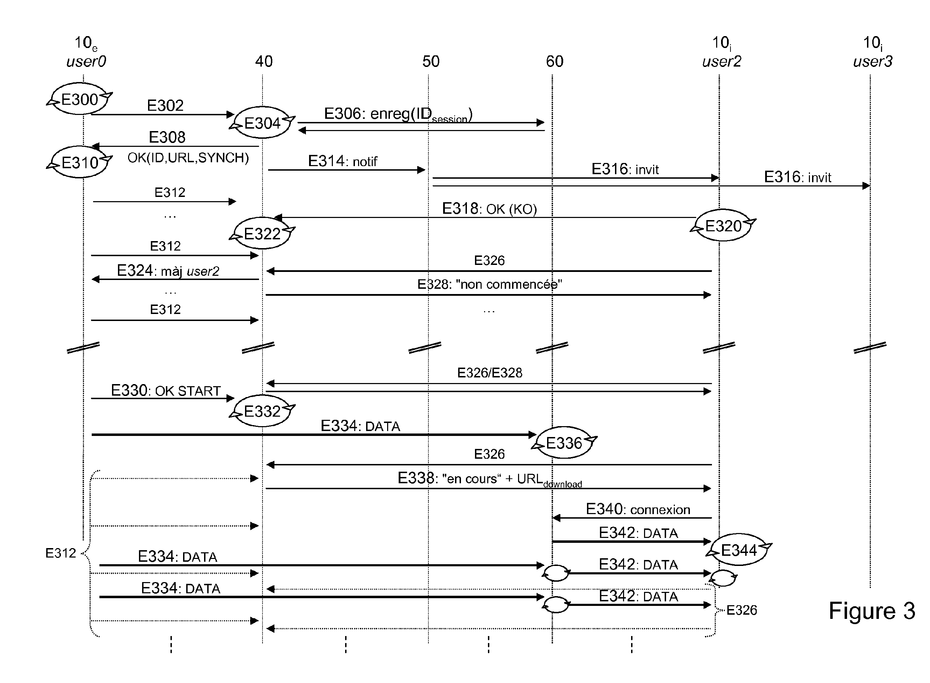

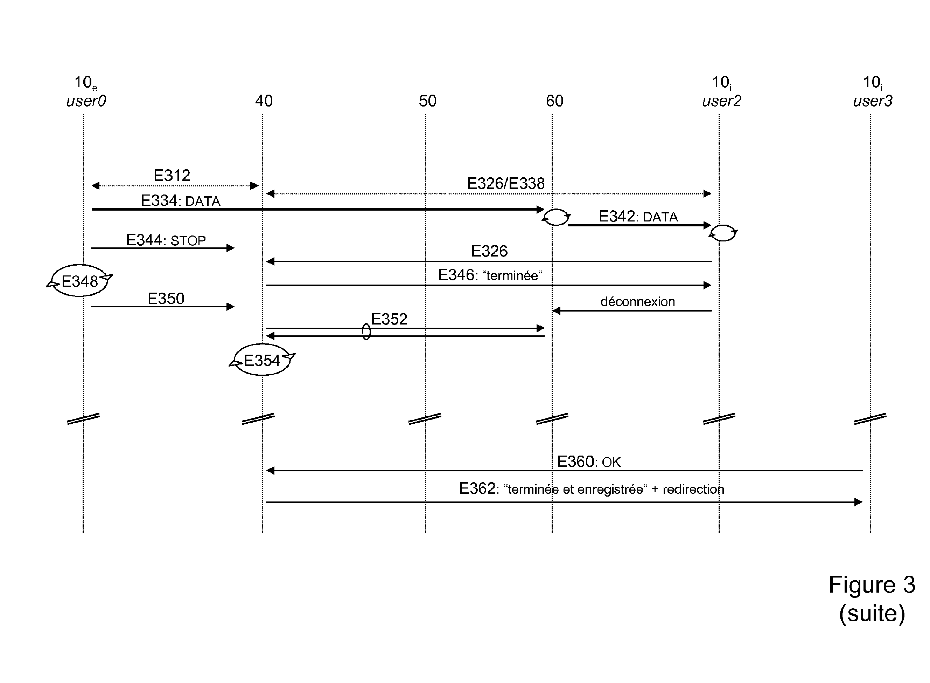

Les écrans des **figures 2a** et **2b** correspondent à une étape E300 (**figure 3**) initiale de sélection, par le terminal émetteur, de plusieurs terminaux invités, qui résulte en l'émission d'une requête de création d'une session *live* auprès du serveur de gestion 40 (étape E302).

Cette requête comprend: l'identifiant IDₑ du terminal émetteur et les identifiants IDᵢ (numéros IMSI par exemple - *International Mobile Subscriber Identity,* ou identifiants des utilisateurs dans le service souscrit et mis en oeuvre par l'application APP) des terminaux invités sélectionnés lors de l'étape E300, ainsi que l'indication d'un enregistrement ou pas de la session *live*, et en option, la durée du *live* que l'utilisateur 10ₑ peut préciser.

A réception de cette requête, le serveur de gestion 40 génère (étape E304) un identifiant unique de session IDₛₑₛₛᵢₒₙ et une information de synchronisation SYNCH sous la forme d'une étiquette temporelle, puis obtient une adresse URL_{upload} de téléchargement auprès du serveur de diffusion 60.

Cette information de synchronisation SYNCH peut par exemple indiquer 60 secondes, ce qui, ajouté à l'instant présent, représente, comme on le verra par la suite, l'instant de démarrage de la sessions en direct.

Pour obtenir cette adresse, le serveur de gestion 40 envoie, au serveur de diffusion 60, une requête E306 identifiant la session créée (IDₛₑₛₛᵢₒₙ) et indiquant le cas échéant si un enregistrement de cette session est à prévoir.

Cette adresse de téléchargement, sous forme d'URL, est destinée à être utilisée par le terminal émetteur 10ₑ pour diffuser son flux vidéo en direct avant rediffusion multiple vers les terminaux invités.

Le serveur de diffusion 60 communique également la ou les adresses URL_{download} de rediffusion du flux vidéo qui seront utilisées par les terminaux invités pour recevoir ce flux vidéo. Il sauvegarde également l'information selon laquelle il devra procéder à l'enregistrement de la session IDₛₑₛₛᵢₒₙ dès réception d'un flux vidéo sur l'adresse URL_{upload} communiquée.

Ces données générées et obtenues sont mémorisées, avec les paramètres de la requête reçue, en base 42 du serveur de gestion.

En réponse à la requête E302, le serveur de gestion 40 retourne un message E308 au terminal émetteur en lui indiquant l'identifiant de la session créée IDₛₑₛₛᵢₒₙ, l'information de synchronisation SYNCH et l'adresse de téléchargement URL_{upload}.

A réception de cette réponse, le terminal émetteur 10ₑ récupère ces informations et bascule (étape E310) dans un état d'attente dans lequel son écran liste, d'une part, les différents utilisateurs invités et leur statut de réponse à l'invitation (à ce moment tous les statuts sont "non répondu", ici par l'indication d'un tiret) et indique, d'autre part, un compte à rebours 15 de temporisation basé sur l'information de synchronisation SYNCH reçue, par exemple d'une minute (**figure 3c**).

Le terminal émetteur 10ₑ n'ayant pas reçu de réponses à ses invitations, la transmission en direct du flux vidéo vers le serveur de diffusion 60 à l'aide de l'adresse URL_{upload} est mise en attente.

L'application APP exécutée sur le terminal 10ₑ assure que le compte à rebours 15 de la temporisation est rafraîchi périodiquement à l'écran.

En outre, un bouton "démarrer live" 17 permet éventuellement à l'utilisateur de démarrer manuellement la diffusion de façon anticipée par rapport à la temporisation SYNCH, dès lors qu'au moins un utilisateur invité a accepté de participer à la session *live*.

A partir de ce moment là, le terminal émetteur 10ₑ émet périodiquement des requêtes de suivi de l'état de réponse des différents terminaux invités 10ᵢ aux invitations, auprès du serveur de gestion 40 (étapes E312). A titre d'exemple, une requête peut être transmise toutes les secondes.

En parallèle, le serveur de gestion 40 envoie une requête E314 au serveur de notification 50 afin que ce dernier "invite" les utilisateurs sélectionnés lors de l'étape E300. Cette requête contient ainsi l'identifiant de la session IDₛₑₛₛᵢₒₙ, les identifiants IDᵢ des utilisateurs invités et l'information de synchronisation SYNCH, ainsi qu'éventuellement le type de terminal pour chacun des utilisateurs invités.

Le type des terminaux peut notamment être mémorisé dans une base générale, par le serveur de gestion 40 au fur et à mesure des diverses connexions des utilisateurs au service. En variante, il peut être précisé par ces utilisateurs lors de leur souscription au service. Enfin, il peut être connu du serveur 50 par l'enregistrement de cette information en base 52 lors de la mémorisation des identifiants des terminaux nécessaires à leur notification.

A l'aide de ces informations et de la base 52, le serveur de notification envoie (E316) une invitation à chacun des terminaux invités 10ᵢ, par SMS, email ou en utilisant le service *Apple Push Notification* selon le type de terminal concerné. Ces invitations comprennent l'identifiant de session, l'information de synchronisation SYNCH et éventuellement l'identifiant IDₑ de l'utilisateur émetteur.

Ces étapes E314 et E316 étant relativement rapides et parallèle à l'étape E308, l'information de synchronisation est ainsi reçue sensiblement en même temps par les différents terminaux invités 10ᵢ et émetteur 10ₑ. Il en résulte ainsi une synchronisation suffisante de ces terminaux, comme vue par la suite, pour permettre le bon déroulement de la session de diffusion.

En effet, un décalage de quelques dizaines ou centièmes de seconde n'est pas préjudiciable au regard d'une session de diffusion en direct.

La **figure 4a** montre un exemple d'écran d'invitation.

Lorsqu'un utilisateur invité répond à cet écran d'invitation (prenons le cas où *user2* répond positivement), une réponse OK est transmise au serveur de gestion (étape E318).

Le terminal invité 10ᵢ de *user2* bascule à son tour dans un état d'attente par l'affichage d'un écran d'attente sur lequel figure également le compte à rebours synchronisé sur l'information SYNCHRO (étape E320 et **figure 4b**).

A ce stade, l'accès au serveur de diffusion 60 pour obtenir la vidéo de la session n'est pas encore réalisé. En d'autres termes, la rediffusion continue et en direct du flux vidéo qui doit être émis par le terminal émetteur est également mise en attente.

Un message d'attente (défini par l'utilisateur émetteur, par l'application, ou voire une publicité) peut également être affiché sur l'écran d'attente, ainsi qu'un bouton d'annulation qui, s'il est sélectionné, envoie une nouvelle réponse E318 indiquant cette fois-ci "KO".

A réception d'une réponse d'un terminal invité, le serveur de gestion met à jour sa base de données 42 en précisant, pour le terminal invité ayant répondu, l'état de sa réponse (étape E322).

Ainsi, à la prochaine requête E312 du terminal émetteur 10ₑ, le serveur de gestion 40 retourne la réponse de l'utilisateur *user2* à l'invitation, ici une réponse positive (E324). La réception de cette réponse permet notamment la mise à jour de l'écran d'attente de la **figure 2c** pour y indiquer que l'utilisateur *user2* est "OK".

Du côté de l'utilisateur *user2,* suite à l'étape E320, le terminal invité 10ᵢ émet périodiquement des requêtes de suivi du statut de la session *live*, auprès du serveur de gestion 40 (étapes E326). A titre d'exemple, une requête peut être transmise toutes les secondes.

A noter que si le serveur de gestion 40 cesse de recevoir ces requêtes périodiques d'un terminal invité, il en déduit que celui-ci a mis fin à l'application et met donc à jour automatiquement son statut de réponse, en le passant à "KO". S'il cesse de recevoir les requêtes périodes E312 du terminal émetteur, il met en revanche fin à la session et indique, dans la base 42, un statut "session annulée".

A ce stade les réponses du serveur de gestion aux requêtes E326 indiquent toutes "session non commencée" (E328), ce qui conduit au maintien de l'affichage de l'écran d'attente sur les terminaux invités 10ᵢ, avec toutefois un rafraîchissement du décompte 15.

Puis survient le moment où le terminal émetteur 10ₑ décide enfin de commencer la diffusion en direct. Ce moment peut résulter de l'expiration de la temporisation SYNCH (compte à rebours 15 qui arrive à 0) avec ou sans confirmation par l'utilisateur émetteur, ou du démarrage manuel de la diffusion à l'aide du bouton 17. Ce commencement de la diffusion peut également être déclenché automatiquement dès que l'ensemble des utilisateurs invités a répondu, indépendamment des réponses dès lors qu'au moins un utilisateur a accepté de participer à la session de diffusion.

Dans ce cas, le terminal émetteur 10ₑ transmet, au serveur de gestion 40, un message de mise à jour du statut de la session en indiquant qu'elle commence (étape E330).

Le serveur de gestion 40 met alors à jour, dans sa base 42, l'information de statut de la session à "en cours" (E332).

Le terminal émetteur 10ₑ se connecte alors au serveur de diffusion 60 à l'adresse URL_{upload} qui lui a déjà été communiquée, puis entame la transmission en continu et en direct d'un flux vidéo FV, par transmission des données vidéo en mode paquets (étapes E334). Il continue toutefois à émettre des requêtes périodiques E312 au serveur de gestion 40, afin notamment de détecter le cas extrême où tous les utilisateurs invités quittent la session, auquel cas il pourra être mis fin automatiquement à la session.

Le flux vidéo FV est notamment créé par capture d'une séquence vidéo à l'aide du capteur 12 et d'un microphone, puis par compression/codage dans un format de codage par l'application APP embarquée. Dans le cas d'un terminal de type Iphone (nom commercial), cette vidéo peut être construite en capturant périodiquement (tous les 1/15 s par exemple) des images photos à l'aide de l'appareil photo intégré, et en les utilisant comme une séquence d'images.

Un exemple de format de codage adapté au domaine de la téléphonie mobile est le format Sorenson Spark (nom commercial) pour la partie vidéo et le format Nelly Moser (nom commercial) pour la partie audio. Bien entendu d'autres formats peuvent être mis en oeuvre dans le cadre de la présente invention.

La réalisation du codage/décodage par l'application APP au niveau des terminaux permet d'améliorer la tenue en charge du serveur de gestion 40.

Pour permettre une transmission efficace de ces données vidéo et audio sur le réseau 20, elles sont en outre encapsulées dans des conteneurs de type FLV.

La transmission des données du flux vidéo FV vers le serveur de diffusion 60 est alors opérée à l'aide d'un protocole de *streaming* tel que le protocole RTMP ("*Real Time Messaging Protocol* ").

Selon le choix effectué lors de l'étape E300 par l'utilisateur émetteur, les données ainsi reçues sont enregistrées localement par le serveur de diffusion 60 (étape E336) à la volée lorsqu'elles arrivent, ou non.

Dès la première requête E326 de l'utilisateur *user2* faisant suite au commencement E330 de la diffusion par le terminal émetteur 10_{e,} le serveur de gestion 40 indique au terminal invité de l'utilisateur *user2* que la session est "en cours" et fournit une adresse URL_{download} de rediffusion à laquelle il peut se connecter (étape E338).

A partir de ce moment là, le terminal invité 10ᵢ se connecte à l'adresse URL_{download} du serveur de diffusion 60 (E340) pour accéder au flux vidéo diffusé, tout en continuant ses requêtes périodiques E326.

Comme précisé précédemment, le serveur de diffusion 60 est prévu pour rediffuser le flux vidéo FV reçu en continu et sans délai (temps réel) depuis le terminal émetteur. Cette rediffusion peut être multiple vers les divers terminaux invités, dès lors que ceux-ci se connectent à lui au travers des adresses URL_{download} qui ont été réservées. La rediffusion est également effectuée à l'aide d'un protocole de *streaming* tel que le protocole RTMP.

Le terminal invité 10ᵢ reçoit (E342) alors les données retransmises en continu et en direct par le serveur de diffusion. Après désencaspulation et décompression de ces données, l'application APP affiche donc en direct (E344) le flux vidéo à l'écran de l'utilisateur *user2.*

Tout utilisateur invité qui répond à l'invitation E316 pendant que la diffusion est en cours se voit indiquer que la session est "en cours" et se voit indiquer une adresse URL_{download} d'accès au serveur de diffusion 60.

Lors que le terminal émetteur met fin à la transmission des données du flux vidéo (par exemple par arrêt volontaire de la diffusion ou par expiration d'une durée prédéterminée du *live),* un message de mise à jour indiquant que la session est "terminée" est envoyé (E344) au serveur de gestion 40 qui met à jour sa base de données 42.

Ainsi, en réponse à toute requête E326 ultérieure, le serveur de gestion 40 indique (E346) aux terminaux invités que la session est "terminée", conduisant ces derniers à mettre fin à leur connexion au serveur de diffusion 60.

Dans le cas où un enregistrement a été demandé, la fin de la session déclenche l'affichage de l'écran de confirmation d'enregistrement de la **figure 2d** reprenant des informations sur le flux vidéo qui vient d'être enregistré (date et heure ainsi que la durée) et permettant de saisir des informations complémentaires (métadonnées: titre, donnée de localisation, mots clés ou encore une information représentative d'une humeur par exemple à l'aide d'icônes, etc.).

L'utilisateur émetteur complète donc cet écran qu'il valide (E348), générant un message E350 à destination du serveur de gestion 40.

Ces données sont stockées en mémoire 42, puis le serveur de gestion 40 récupère (E352) l'enregistrement auprès du serveur de diffusion afin de le stocker sur le serveur 34 et d'y indiquer les métadonnées ajoutées par l'utilisateur (E354). Ce stockage peut être réalisé en particulier en association avec le compte utilisateur de l'utilisateur émetteur afin que l'enregistrement de la session *live* constitue un nouveau billet vidéo posté sur son compte du site de réseau social.

A la fin de la session en cas d'enregistrement, il peut être proposé, aux utilisateurs invités ayant participé à la session, d'accéder à la page web de l'utilisateur émetteur contenant ce nouveau billet vidéo.

Si postérieurement à la fin de la session de diffusion, le terminal invité de l'utilisateur *user3* répond positivement (étape E360), le serveur de gestion 40 indique, en réponse E362, que la session est "terminée et enregistrée" et fournit, au terminal invité *user3,* une adresse de redirection vers le billet vidéo ainsi posté. L'utilisateur *user3* n'ayant pas assisté à la diffusion en direct peut ainsi visualiser le flux vidéo FV.

Les **figures 2c** et **2d** présentent deux exemples d'écran qui peuvent s'afficher sur le terminal invité *user3* dans ce cas, l'un indiquant l'existence du billet vidéo et proposant de s'y rendre (**figure 2c**) et l'autre basculant automatiquement sur la page de l'utilisateur émetteur sur le site de réseau social, cette page incluant notamment le billet vidéo sur lequel l'utilisateur *user3* peut cliquer pour le visualiser (**figure 2d**).

Les exemples qui précèdent ne sont que des modes de réalisation de l'invention qui ne s'y limite pas.

Bien entendu, les actions d'annulation n'ont pas été décrites en détail ci-dessus, mais comme présenté sur différentes figures, des boutons "annuler" sont prévus pour permettre à l'utilisateur de mettre fin à une action (à la session pour l'utilisateur émetteur, à participer à la session pour un utilisateur invité, à confirmer l'enregistrement de la session, etc.). L'homme de l'art n'aura aucune difficulté, au vu de la description ci-dessus, à adapter les différentes étapes correspondantes (mise à jour de la base 42 et réponses aux requêtes E312 ou E326 pour informer des annulations).

Par ailleurs, la connexion aux serveurs 40 et 60 depuis un utilisateur 36 du réseau Internet 30 ne soulève pas de difficulté majeure, les technologies mobile-to-web étant connues de l'homme de l'art. Ainsi, la session de diffusion en continu et en direct d'un flux vidéo selon l'invention peut également être accessible depuis le poste 36 du réseau Internet.

Ce peut être le cas par exemple si un contact invité par l'utilisateur émetteur est invité par email.

## Revendications

1. Procédé de gestion d'une session de diffusion en continu d'un flux vidéo (FV) affiché en direct sur une pluralité de terminaux (10) connectés à un réseau de communication (20, 30), comprenant des étapes consistant à :
- envoyer (E314, E316) des invitations à participer à la session de diffusion, à destination d'une pluralité de terminaux invités (10ᵢ) et sélectionnés à partir d'un terminal émetteur (10ₑ);
- mettre (E310) le terminal émetteur dans un état d'attente qui est fonction d'une durée prédéterminée de synchronisation (SYNCH), état pendant lequel le terminal émetteur ne transmet pas, dans ladite session de diffusion créée, de flux vidéo en direct à destination d'un serveur de diffusion (60) apte à recevoir et à multidiffuser en continu un flux vidéo (FV);
- mettre (E320) les terminaux invités ayant répondu positivement à l'invitation dans un état d'attente qui est synchronisé avec celui du terminal émetteur;
- lorsque le terminal émetteur quitte son état d'attente pour transmettre un flux vidéo en direct au serveur de diffusion, permettre (E338), aux terminaux invités ayant répondu positivement à l'invention, d'accéder (E340) au serveur de diffusion pour recevoir le flux vidéo diffusé en continu.

2. Procédé selon la revendication 1, dans lequel la durée prédéterminée de l'état d'attente est définie à compter de l'envoi desdites invitations.

3. Procédé selon la revendication 2, comprenant une étape d'affichage, sur un terminal invité ou émetteur, d'un compte à rebours (15) de ladite durée prédéterminée.

4. Procédé selon la revendication 3, comprenant, pendant l'état d'attente, l'affichage sur le terminal émetteur d'un statut des réponses des terminaux invités à ladite invitation.

5. Procédé selon l'une des revendications 2 à 4, dans lequel la transmission en direct du flux vidéo depuis le terminal émetteur vers le serveur de diffusion et la rediffusion continue dudit flux vidéo depuis le serveur de diffusion vers lesdits terminaux invités sont automatiquement déclenchées à l'expiration de la durée prédéterminée.

6. Procédé selon l'une des revendications 2 à 5, dans lequel, en réponse à une action manuelle sur ledit terminal émetteur prévue pour déclencher ladite transmission en direct du flux vidéo, le terminal émetteur quitte l'état d'attente avant l'expiration de ladite durée prédéterminée.

7. Procédé selon l'une des revendications 2 à 6, comprenant une étape de transmission (E316) à ladite pluralité de terminaux invités (10ᵢ) d'un signal de synchronisation (SYNCH) définissant la durée prédéterminée.

8. Procédé selon l'une des revendications précédentes, dans lequel l'étape consistant à permettre aux terminaux invités l'accès au serveur de diffusion comprend, suite au commencement (E330) de la diffusion du flux vidéo en direct par le terminal émetteur, la transmission d'une adresse (URL_{download}) du serveur de diffusion sur laquelle ledit flux vidéo est rediffusé en continu par le serveur de diffusion.

9. Procédé selon l'une des revendications précédentes, dans lequel les terminaux invités (10ᵢ) ayant répondu positivement à ladite invitation consultent (E326) périodiquement une information de statut de ladite session de diffusion, cette information étant maintenue à jour par un serveur de gestion (40), et le procédé comprend, en réponse à une dite consultation d'un terminal invité après un déclenchement (E330) de ladite transmission (E334) en direct du flux vidéo (FV) depuis le terminal émetteur (10ₑ) vers le serveur de diffusion (60), une étape de transmission (E338), audit terminal invité (10ᵢ), d'une adresse (URL_{download}) d'accès au serveur de diffusion de sorte, pour ledit terminal invité, à accéder au flux vidéo diffusé en continu.

10. Procédé selon l'une des revendications précédentes, comprenant des étapes consistant à :
- enregistrer (E336) le flux vidéo (FV) diffusé en continu à un emplacement (34) de stockage accessible par l'Internet, et
- lorsqu'un terminal invité (10ᵢ) répond positivement à ladite invitation et postérieurement à la fin (E344) de la session de diffusion, rediriger (E362) ledit terminal invité vers l'emplacement de stockage dudit flux vidéo enregistré.

11. Système (1) de gestion d'une session de diffusion en continu d'un flux vidéo (FV) affiché en direct sur une pluralité de terminaux (10) connectés à un réseau de communication (20, 30), comprenant :
- un module de notification (50) apte à envoyer des invitations à participer à la session de diffusion, à destination d'une pluralité de terminaux invités (10ᵢ) et sélectionnés à partir d'un terminal émetteur (10ₑ);
- un premier moyen de mise en attente configuré pour mettre le terminal émetteur dans un état d'attente qui est fonction d'une durée prédéterminée de synchronisation (SYNCH), état pendant lequel le terminal émetteur ne transmet pas, dans ladite session de diffusion créée, de flux vidéo en direct à destination d'un serveur de diffusion (60) apte à recevoir et à multidiffuser en continu un flux vidéo (FV);
- un second moyen de mise en attente configuré pour mettre les terminaux invités ayant répondu positivement à l'invitation dans un état d'attente qui est synchronisé avec celui du terminal émetteur;
- un moyen (URL_{downnload}) permettant, lorsque le terminal émetteur quitte son état d'attente pour transmettre un flux vidéo en direct au serveur de diffusion, l'accès, par les terminaux invités ayant répondu positivement à ladite invitation, au serveur de diffusion (60) pour recevoir le flux vidéo diffusé en continu.

12. Produit programme d'ordinateur lisible par un microprocesseur, comprenant des instructions pour la mise en oeuvre du procédé de gestion conforme à l'une des revendications 1 à 10, lorsque ce programme est chargé et exécuté par le microprocesseur.
